# EUROPÄISCHE PATENTSCHRIFT

(11) **EP 1 658 205 B1**
(45) Veröffentlichungstag und Bekanntmachung des Hinweises auf die Patenterteilung: **03.11.2010**
(21) Anmeldenummer: 04732609.5
(22) Anmeldetag: 13.05.2004
(51) Int. Cl.: B60R 21/34

(54) **VORRICHTUNG UND VERFAHREN ZUM ANHEBEN DER FRONTHAUBE EINES KRAFTFAHRZEUGS BEI EINER FUSSGÄNGERKOLLISION**
DEVICE AND METHOD FOR RAISING THE BONNET OF A MOTOR VEHICLE DURING A COLLISION WITH A PEDESTRIAN
DISPOSITIF ET PROCEDE POUR SOULEVER LE CAPOT FRONTAL D'UNE AUTOMOBILE EN CAS DE COLLISION AVEC UN PIETON

(30) Priorität: 06.06.2003 DE 10326140; 28.11.2003 DE 10356310
(43) Veröffentlichungstag der Anmeldung: 24.05.2006
(73) Patentinhaber: ACTS-Advanced Car Technology Systems GmbH & Co.KG, 63877 Sailauf (DE)
(72) Erfinder: SCHEUCH, Volker, 63877 Sailauf (DE); SCHMIDT, Werner, 63755 Alzenau (DE); ZILG, Martin, 63741 Aschaffenburg (DE); HÜNDLING, Andree, 85057 Ingolstadt (DE); GOSEBERG, Frank, 42283 Wuppertal (DE)
(74) Vertreter: Völger, Silke Beatrix
(86) Internationale Anmeldenummer: PCT/EP2004/005120
(87) Internationale Veröffentlichungsnummer: WO 2004/108486

(56) Entgegenhaltungen:
- EP-A- 1 293 400
- EP-A- 1 319 561
- WO-A-03/086826
- GB-A- 2 382 548

## Beschreibung

Die Erfindung betrifft eine Vorrichtung zum Anheben der Fronthaube eines Kraftfahrzeugs bei einer Fußgängerkollision mit einem Halteglied zur Sicherung der Fronthaube an der Fahrzeugkarosserie und einer pyrotechnischen Sprengeinheit zum Lösen des Halteglieds. Die Erfindung betrifft weiter ein entsprechendes Verfahren.

Aus der DE-A-102 52 560 ist eine Vorrichtung dieser Art bekannt, um bei einem Fußgängeraufprall durch Anheben der deformierbaren Fronthaube einen weicheren Aufprall gegenüber der steifen Unterstruktur zu ermöglichen. Zum Anstellen der Fronthaube wird eine vorgespannte Hubfeder genutzt, die über eine pyrotechnische Schnelltrennvorrichtung auslösbar ist.

Das nachveröffentlichte Dokument WO 03/086826 A1 zeigt eine Vorrichtung zum Anstellen einer Fronthaube im Kollisionsfall. Hierbei wird über eine pyrotechnische Sprengeinheit zunächst ein Scharnier entriegelt und anschließend ein Hubmittel betätigt, welches ein Anstellen der Fronthaube bewirkt.

Aus der EP 1 293 400 A2 ist eine Anordnung einer Frontklappe an einem Fahrzeug mit einer Schamiereinrichtung bekannt. Im Kollisionsfall wird die Fronthaube über eine an einem Steuerlenker der Schamiereinrichtung angeordnete energiespeichemde Einrichtung angehoben. Der Steuerlenker ist dabei im Normalbetrieb des Fahrzeugs über einen Haken drehfest fixiert und wird erst im Kollisionsfall über die energiespeichemde Einrichtung entriegelt.

Daneben ist es auch bekannt, ein pyrotechnisches Stellglied für die Anstellbewegung einzusetzen, wobei das Fronthaubenschloss über eine zusätzliche Entriegelungsvorrichtung geöffnet wird. Hierbei ist die Abstimmung zwischen Entsichern und Auslösen kritisch, wofür mindestens zwei Steuersignale erforderlich sind. Diese müssen zur Vermeidung von Fehlauslösungen gesondert auf Plausibilität geprüft werden, was die Reaktionszeit zusätzlich verschlechtert.

Ausgehend hiervon liegt der Erfindung die Aufgabe zugrunde, die im Stand der Technik ausgetretenen Nachteile zu vermeiden und mit einfachen Mitteln eine zuverlässige Hubvorrichtung zu schaffen.

Zur Lösung dieser Aufgabe wird die in den unabhängigen Patentansprüchen angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, das Entsichern und Auslösen in einem Zwangsablauf zu kombinieren. Dementsprechend werden mittels der beim Lösen des Halteglieds freigesetzten Energie der Sprengeinheit betätigbare Hubmittel zum Anheben der Fronthaube in eine Kollisionsstellung vorgeschlagen. Auf diese Weise kann die pyrotechnische Einheit eine Doppelfunktion erfüllen, indem die Haltegliedverbindung zwischen Karosserie und Fronthaube gelöst wird und mit der überschüssigen Energie die Hubbewegung angetrieben wird. Hierdurch ist der zeitliche Ablauf festgelegt, d.h. ein Anheben ist erst möglich, nachdem das System entsichert ist. Eine Blockade des Aktuators durch eine Fehlabstimmung der Steuerung ist somit ausgeschlossen.

Gemäß einer bevorzugten Ausgestaltung der Erfindung bildet das Halteglied ein Verbindungselement zur mindestens in Hubrichtung starren Verbindung der Fronthaube mit der Fahrzeugkarosserie.

Vorteilhafterweise besitzt das Halteglied zwei an einer Sollbruchstelle durch die Sprengeinheit trennbare Haltegliedteile, welche als Hubmittel durch die Sprengeinheit auseinanderbewegbar sind. Auf diese Weise ist es möglich, die kinetische Energie für die Hubbewegung der Fronthaube zu nutzen.

Um die Trennfunktion zu optimieren, ist es vorteilhaft, wenn die Sprengeinheit in einen Hohlraum des Halteglieds eingesetzt ist.

Zur Übertragung des durch den Treibgasstrom der Sprengeinheit vermittelten Impulses können die Hubmittel ein Übertragungselement aufweisen.

Eine vorteilhafte Ausführung sieht vor, dass die Hubmittel eine das Halteglied und die darin befindliche Sprengeinheit umschließende, insbesondere durch eine Hülse gebildete Zylindereinheit als Übertragungselement umfassen. Um die Hubbewegung noch besser steuern zu können, ist es von Vorteil, wenn die Hubmittel eine mittels des Treibgases der Sprengeinheit in Hubrichtung expandierbare, vorzugsweise als Gewebesack, Faltenbalg oder Teleskoprohr ausgebildete Expansionseinheit umfassen.

Vorteilhafterweise ist die Fronthaube über ein mehrgelenkiges Haubenscharnier an der Fahrzeugkarosserie angelenkt, wobei ein erstes Gelenk für den Normalbetrieb und ein zweites Gelenk für den Kollisionsfall vorgesehen ist und die über das zweite Gelenk verbundenen Scharnierglieder durch das Halteglied aneinander gesichert und durch die Sprengeinheit gegeneinander aufspreizbar sind.

Eine weitere vorteilhafte Ausgestaltung sieht vor, dass die Sprengeinheit in einem vorzugsweise schwanenhalsförmigen Scharnierglied eines die Fronthaube mit der Fahrzeugkarosserie verbindenden Haubenscharniers angeordnet ist, und dass das das Halteglied bildende Scharnierglied durch die Sprengeinheit auftrennbar ist.

Gemäß einer weiteren vorteilhaften Ausgestaltung umfassen die Hubmittel einen in einem Hubzylinder geführten Hubkolben, wobei der Hubkolben durch das Halteglied in einer Verriegelungsstellung gesichert ist und das Halteglied durch das den Hubzylinder beaufschlagende Treibgas der Sprengeinheit lösbar ist. Hierbei ist es günstig, wenn das vorzugsweise als Passstift ausgebildete Halteglied in der Verriegelungsstellung einen Formschluss zwischen Hubkolben und Hubzylinder herstellt und mittels des Treibgases in eine den Formschluss aufhebende Freigabestellung beweglich ist.

Eine weitere Variante sieht vor, dass die Sprengeinheit gleichsam als Gasgenerator unter Erzeugung von Treibgas als pyrotechnisches Antriebsmittel wirksam ist.

Zur Begrenzung und/oder Steuerung der Hubbewegung der Fronthaube ist vorteilhafterweise ein haubenseitig und karosserieseitig angebundener Hubbegrenzer vorgesehen. Hier ist es günstig, wenn der Hubbegrenzer durch ein biegeweiches Gewebeteil oder ein aufreiß- oder aufbiegbares Blechteil oder ein deformierbares Kunststoffteil gebildet ist.

Eine Sicherung der Fronthaube gegen Verlagerung quer zur Hubrichtung lässt sich durch mindestens ein in eine Passöffnung eingreifendes Passelement erreichen.

In verfahrensmäßiger Hinsicht wird die eingangs genannte Aufgabe dadurch gelöst, dass die Fronthaube mittels der beim Lösen des Halteglieds freigesetzten Energie der Sprengeinheit in eine Kollisionsstellung angehoben wird.

Im Folgenden wird die Erfindung anhand der in der Zeichnung in schematischer Weise dargestellten Ausführungsbeispiele näher erläutert. Es zeigen
- Fig. 1: eine Hubvorrichtung für die Fronthaube eines Kraftfahrzeugs im nicht ausgelösten Zustand in einem Vertikalschnitt;
- Fig. 2: die Hubvorrichtung nach Fig. 1 im ausgelösten Zustand;
- Fig. 3: eine teleskopartige Hubvorrichtung in einer Fig. 2 entspre- chenden Darstellung;
- Fig. 4: eine weitere Hubvorrichtung mit einem Faltenbalg als Hubmit- tel in einer Fig. 1 entsprechenden Darstellung;
- Fig. 5 und 6: eine Hubvorrichtung mit einem Kolbenantrieb im Ruhe- und Auslösezustand im Vertikalschnitt; und
- Fig.7: eine Hubvorrichtung an einem Mehrgelenkscharnier in ver- schiedenen Funktionsstellungen in einer Seitenansicht.

Die in der Zeichnung dargestellten Hubvorrichtungen dienen zum Fußgängerschutz an einem Personenkraftwagen im Kollisionsfall. Sie bestehen im Wesentlichen aus einem Halteglied 10 zur Sicherung der Fronthaube 12 des Fahrzeugs an der Fahrzeugkarosserie 14, einer pyrotechnischen Sprengeinheit 16 zum Lösen des Halteglieds 10 und Hubmitteln 18 zum Anheben der Fronthaube 12 in eine Kollisionsstellung. Durch das Anstellen der deformierbaren Fronthaube 12 wird ein die Aufprallenergie absorbierender Deformationsbereich gegenüber dem darunter liegenden Motorblock geschaffen, um so Verletzungen der aufprallenden Person zu mindern.

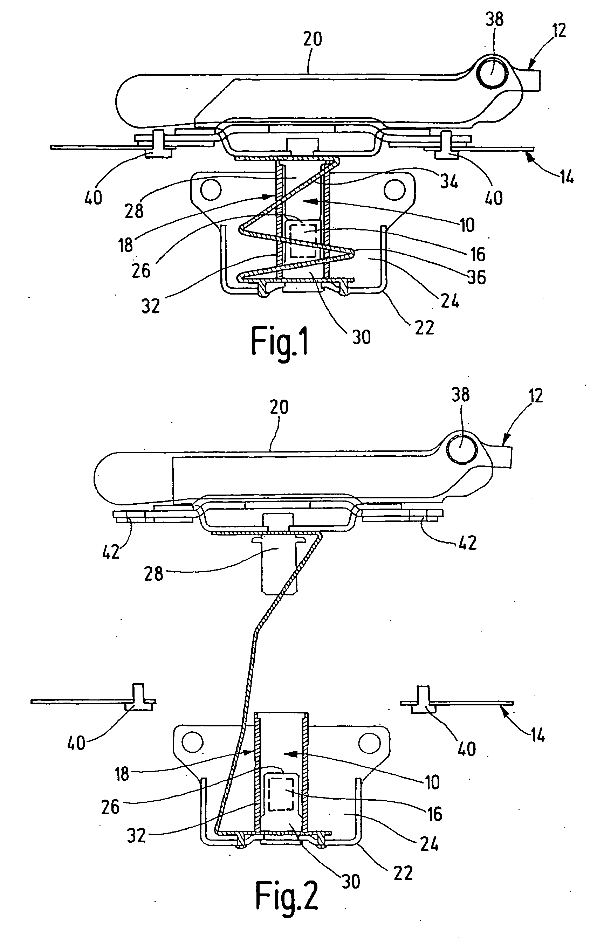

Bei der in Fig. 1 und 2 gezeigten Ausführungsform ist das schaftförmige Halteglied 10 an seinen Stirnenden über einen Formschluss an das Haubenscharnier 20 und an ein karosseriefestes Anschlussteil 22 angebunden. Das Anschlussteil 22 ist durch eine mit dem Fahrzeuglängsträger verschraubbare Flanschplatte 24 gebildet. Das Halteglied 10 ist als Hohlschaft ausgeführt, in welchen der pyrotechnische Sprengsatz 16 eingesetzt ist. Der Hohlschaft weist eine zu dem Sprengsatz korrespondierende Trennstelle bzw. Sollbruchstelle 26 auf, die durch eine mantelseitig umlaufende Spitznut gebildet ist. Die Sprengeinheit 16 ist durch eine nicht dargestellte Zündeinrichtung im Falle eines durch geeignete Crash-Sensoren erfassten Fußgängeraufpralls mit kurzer Verzögerungszeit auslösbar.

Das Halteglied 10 erfüllt die Aufgabe, das Haubenscharnier 20 im Betriebszustand über eine starre Verbindung an die Fahrzeugkarosserie 14 anzubinden. Es macht somit einen Kraftfluss zwischen dem Haubenscharnier 20 bzw. der Fronthaube 12 und der Fahrzeugkarosserie 14 möglich. Im Kollisionsfall wird die Verbindung an der Sollbruchstelle 26 gelöst, wobei das Halteglied 10 in zwei Haltegliedteile 28, 30 getrennt wird. Die Haltegliedteile 28, 30 bewegen sich nach der Trennung unter Ausnutzung der überschüssigen Energie der Sprengeinheit 16 in Hubrichtung auseinander.

Um den durch den Treibgasstrom der Sprengeinheit 16 vermittelten Impuls zielgerichtet zu übertragen, ist das Hubmittel 18 als Übertragungselement in Form einer Hülse 32 ausgeführt. Die Hülse 32 umschließt das Halteglied 10 koaxial und überdeckt dabei die Sollbruchstelle 26 großflächig. Sie bildet somit eine Art von Schusskanal, um die erzeugte Druckkraft zielgerichtet zu nutzen. Solange sich das abgetrennte Haltegliedteil 28 innerhalb der Hülse 32 befindet, wird es vom Druck des entstehenden Treibgases beschleunigt, wobei das angebundene Haubenscharnier 20 und somit auch die Fronthaube 12 angehoben bzw. angestellt werden. Außerhalb dieses Beschleunigungsbereiches wird die Hubbewegung durch die Massenträgheit der Anordnung bis zum Erreichen einer Endlage fortgeführt.

Die Endlage wird durch einen Hubbegrenzer 34 bestimmt, der durch ein an Biegelinien 36 aufbiegbares Blechteil gebildet ist. Das Blechteil ist in mehreren Lagen vorgefaltet und biegt sich bei der Hubbewegung in die in Fig. 2 gezeigte Strecklage auf. An seinen Enden ist das Blechteil 34 an der Flanschplatte 22 und an dem Haubenscharnier 24 befestigt. Vorteilhafterweise wird die Fronthaube 12 in ihrem frontscheibenseitigen Bereich angehoben, während die in Fahrtrichtung weisende Haubenseite zweckmäßig über ein Gelenk in der abgesenkten Schließstellung gehalten wird, so dass insgesamt eine zur Frontscheibe ansteigende Rampe gebildet wird.

In der Ausgangs- bzw. Normalstellung ist die Fronthaube 12 um die Scharnierachse 38 aufschwenkbar, um den Zugang zum Motor- bzw. Frontraum freizugeben. Zur Sicherung des Haubenscharniers 20 gegen eine Verlagerung quer zu der generell nach oben verlaufenden Hubrichtung sind Passstifte 40 vorgesehen, welche karosseriefest angebracht sind und in vertikale haubenseitige Passbohrungen 42 eingreifen.

Bei den folgenden Ausführungsbeispielen sind gleiche oder ähnliche Teile mit denselben Bezugszeichen versehen wie vorstehend erläutert.

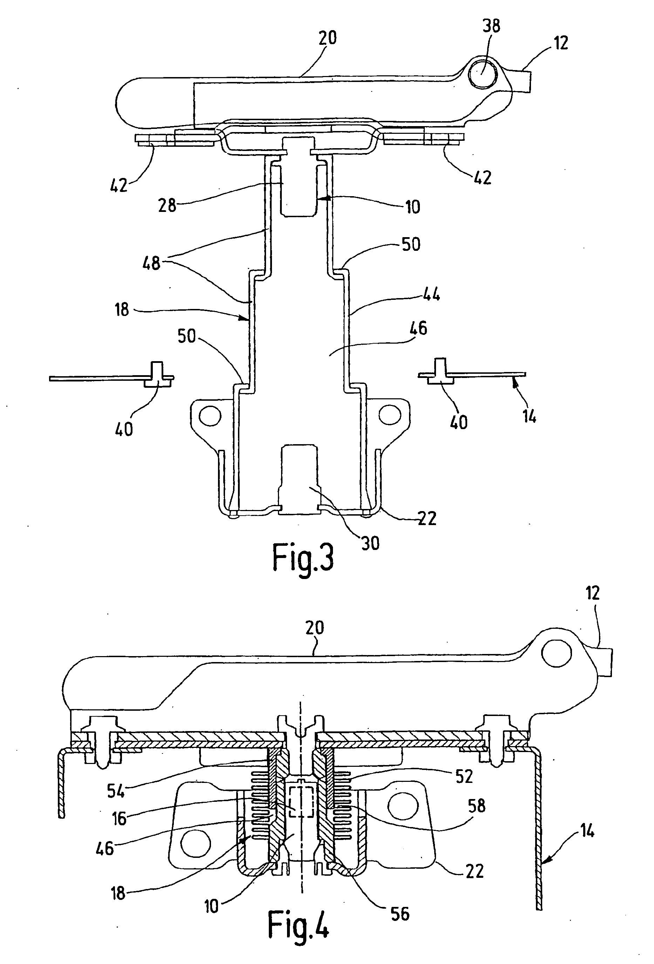

Das in Fig. 3 gezeigte Ausführungsbeispiel unterscheidet sich im Wesentlichen dadurch, dass anstelle einer fahrzeugfesten Hülse ein in Hubrichtung ausfahrbares Teleskoprohr 44 als Hubmittel vorgesehen ist. Dieses Teleskoprohr 44 umschließt das Halteglied 10 und die darin befindliche Sprungeinheit 16, so dass das erzeugte Treibgas in dem Innenraum 46 die Hubbewegung unterstützt. Dabei bilden die Teleskoprohrteile 48 über ineinander greifende Stirnfalze 50 einen Bewegungsanschlag zur Begrenzung der Hubbewegung.

Fig. 4 zeigt eine Anordnung mit einem Faltenbalg 52 aus dünnem Metallblech als Hubmittel. Dieser umschließt den Schaft des Halteglieds 10 konzentrisch, wobei die stirnseitigen Balgabschnitte über innenliegende, axial ineinander greifende Hülsenteile 54, 56 mit dem Haubenscharnier 20 und dem Anschlussteil 22 fest verbunden sind. Auch hier treibt das im Innenraum 46 des Faltenbalgs 52 freigesetzte Treibgas die Hubanordnung an, während die umlaufenden Falten 58 gestreckt werden. Auf diese Weise wird die Hubbewegung gedämpft und zugleich eine Hubbegrenzung in der Strecklage erreicht.

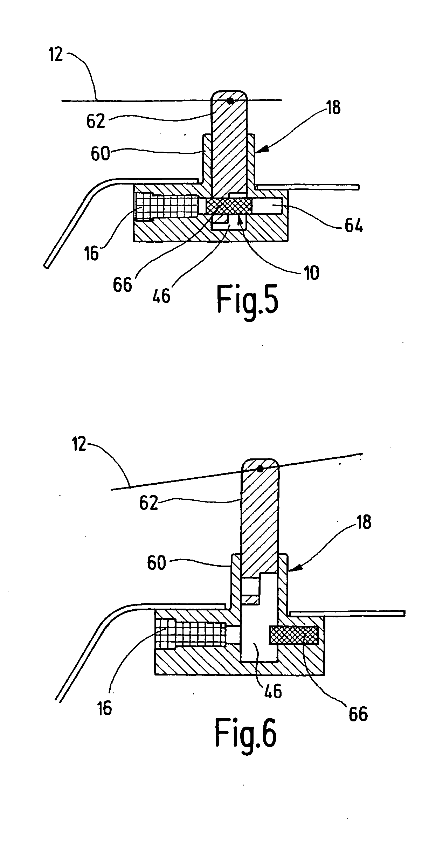

Bei der Ausführungsform gem. Fig. 5 und 6 umfassen die Hubmittel 18 einen in einem Hubzylinder 60 geführten Hubkolben 62, welcher an seinem oberen Ende an der Fronthaube 12 angelenkt ist. An seinem zylinderseitigen Ende ist der Hubkolben 62 über das Halteglied 10 formschlüssig in seiner in Fig. 5 gezeigten Verriegelungsstellung gesichert. Hierbei ist das als Passstift 64 ausgebildete Halteglied 10 in einem quer durch den Zylinderraum 46 verlaufenden Querkanal 64 geführt. Die in den Querkanal 64 eingesetzte pyrotechnische Einheit 16 wirkt in diesem Fall lediglich als Gasgenerator bzw. pyrotechnisches Antriebsmittel. Das im Auslösefall erzeugte Treibgas wird zunächst auf die zugewandte Stirnseite des Passstiftes 66 geleitet, welcher dadurch aus seiner Verriegelungsstellung in die in Fig. 6 gezeigte Freigabestellung gelangt. Dadurch wird der Kolben 62 freigegeben und der Zylinderraum 46 bodenseitig mit Treibgas beaufschlagt, so dass die Motorhaube 12 in die durch nicht gezeigte Anschläge gesicherte angehobene Endstellung gelangt.

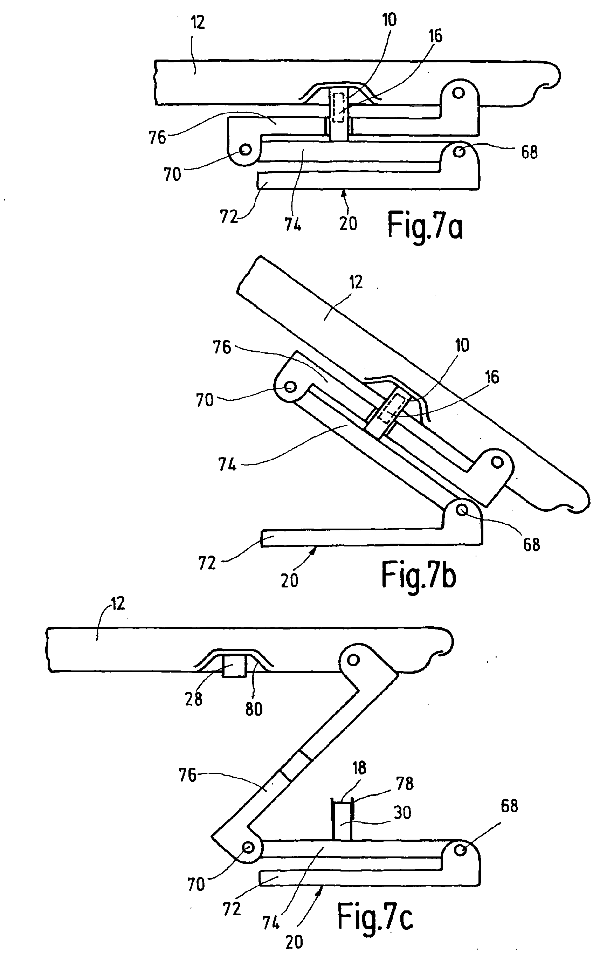

Bei dem Ausführungsbeispiel gemäß Fig. 7 ist ein mehrgelenkiges Haubenscharnier 20 für verschiedene Funktionsstellungen vorgesehen. Fig. 7a zeigt die normale Stellung bei geschlossener Fronthaube 12, während Fig. 7b die offene Stellung und Fig. 7c die Kollisionsstellung der Fronthaube 12 veranschaulicht. Die genannten Stellungen sind durch wechselweises Aufspreizen der über die Scharniergelenke 68, 70 in Z-Faltung mit einander verbundenen Scharnierglieder 72, 74, 76 realisierbar. Im Normalbetrieb verbindet das Halteglied 10 die oberen Scharnierglieder 74, 76 fest mit der Fronthaube 12. Im Kollisionsfall wird das Halteglied 10 wie in Fig. 7c gezeigt aufgesprengt, wobei die voneinander getrennten Haltegliedteile 28, 30 als Hubmittel zugleich den Druckimpuls für das Anheben der Fronthaube 12 übertragen. Um den Treibgasstrom besser auszunutzen, kann die Trennstelle 18 durch eine Hülse 78 umschlossen sein, während das obere Haltegliedteil 28 in einer Auffangmulde 80 der Motorhaube 12 vertieft angebracht ist.

Wie nicht eigens dargestellt, ist es auch möglich, dass die Sprengeinheit in einem Scharnierglied eines die Fronthaube tragenden Schwanenhalsscharnieres angeordnet ist. Im Auslösefall trennt die pyrotechnische Sprengeinheit den das Halteglied bildenden Scharnierhals und stellt die Energie zum Anstellen der Fronthaube zur Verfügung. Dabei ist es vorteilhaft, wenn ein in den Scharnierhals eingesetztes Deformationselement die Hubbewegung führt, dämpft und begrenzt. Durch das Deformationselement kann auch die Fronthaube in der Anstellposition gehalten und die Aufprallenergie des Fußgängers absorbiert werden.

## Patentansprüche

1. Vorrichtung zum Anheben der Fronthaube (20) eines Kraftfahrzeugs bei einer Fußgängerkollision mit einem Halteglied (10) zur Sicherung der Fronthaube (20) an der Fahrzeugkarosserie (14) und einer pyrotechnischen Sprengeinheit (16) zum Lösen des Halteglieds (10), wobei mittels der beim Lösen des Halteglieds (10) freigesetzten Energie der Sprengeinheit (16) Hubmittel (18) zum Anheben der Fronthaube (20) in eine Kollisionsstellung betätigbar sind, und wobei die Hubmittel (18) eine mittels des Treibgases der Sprengeinheit (16) in Hubrichtung expandierbare, vorzugsweise als Gewebesack, Faltenbalg oder Teleskoprohr ausgebildete Expansionseinheit (44; 58) umfassen, **dadurch gekennzeichnet, dass** die Sprengeinheit (16) in einen Hohlraum des Halteglieds (10) eingesetzt ist.

2. Vorrichtung nach Anspruch 1, **dadurch gekennzeichnet, dass** das Halteglied (10) ein Verbindungselement zur mindestens in Hubrichtung starren Verbindung der fronthaube (20) mit der Fahrzeugkarosserie (14) bildet.

3. Vorrichtung nach Anspruch 1 oder 2, **dadurch gekennzeichnet, dass** das Halteglied (10) zwei an einer Sollbruchstelle durch die Sprengeinheit (16) trennbare Haltegliedteile (28,30) aufweist, und dass die Haltegliedteile (28,30) als Hubmittel (18) durch die Sprengeinheit (16) auseinanderbewegbar sind.

4. Vorrichtung nach einem der Ansprüche 1 bis 3, **dadurch gekennzeichnet, dass** die Hubmittel (18) ein Übertragungselement zur Übertragung des durch den Treibgasstrom der Sprengeinheit (16) vermittelten Impulses aufweisen.

5. Vorrichtung nach einem der Ansprüche 1 bis 4, **dadurch gekennzeichnet, dass** die Hubmittel (18) eine das Halteglied (10) und die darin befindliche Sprengeinheit (16) umschließende, insbesondere durch eine Hülse gebildete Zylindereinheit (32) umfassen.

6. Vorrichtung nach einem der Ansprüche 1 bis 5, **dadurch gekennzeichnet, dass** die Fronthaube (20) über ein mehrgelenkiges Haubenscharnier (20) an der Fahrzeugkarosserie (14) angelenkt ist, wobei ein erstes Gelenk (68) für den Normalbetrieb und ein zweites Gelenk (70) für den Kollisionsfall vorgesehen ist und die über das zweite Gelenk (70) verbundenen Scharnierglieder (74,76) durch das Halteglied (10) aneinander gesichert und durch die Sprengeinheit (16) gegeneinander aufspreizbar sind.

7. Vorrichtung nach einem der Ansprüche 1 bis 6, **dadurch gekennzeichnet, dass** die Sprengeinheit (16) in einem vorzugsweise schwanenhalsförmigen Scharnierglied eines die Fronthaube (20) mit der Fahrzeugkarosserie (14) verbindenden Haubenscharniers (20) angeordnet ist, und dass das das Halteglied (10) bildende Scharnierglied durch die Sprengeinheit (16) auftrennbar ist.

8. Vorrichtung nach einem der Ansprüche 1 bis 7, **dadurch gekennzeichnet, dass** die Hubmittel (18) einen in einem Hubzylinder (60) geführten Hubkolben (62) umfassen, wobei der Hubkolben (62) durch das Halteglied (10) in einer Verriegelungsstellung gesichert ist und das Halteglied (10) durch das den Hubzylinder (60) beaufschlagende Treibgas der Sprengeinheit (16) lösbar ist.

9. Vorrichtung nach Anspruch 8, **dadurch gekennzeichnet, dass** das vorzugsweise als Passstift ausgebildete Halteglied (10) in der Verriegelungsstellung einen Formschluss zwischen Hubkolben (62) und Hubzylinder (62) herstellt und mittels des Treibgases in eine den Formschluss aufhebende Freigabestellung beweglich ist.

10. Vorrichtung nach einem der Ansprüche 1 bis 9, **dadurch gekennzeichnet, dass** die Sprengeinheit (16) unter Erzeugung von Treibgas als pyrotechnisches Antriebsmittel wirksam ist.

11. Vorrichtung nach einem der Ansprüche 1 bis 10, **gekennzeichnet durch** einen haubenseitig und karosserieseitig angebundenen Hubbegrenzer (34) zur Begrenzung und/oder Steuerung der Hubbewegung der Fronthaube (20).

12. Vorrichtung nach Anspruch 11, **dadurch gekennzeichnet, dass** der Hubbegrenzer (34) durch ein biegeweiches Gewebeteil oder ein aufreiß- oder aufbiegbares Blechteil oder ein deformierbares Kunststoffteil gebildet ist.

13. Vorrichtung nach einem der Ansprüche 1 bis 12, **dadurch gekennzeichnet, dass** zur Sicherung der Fronthaube (20) gegen eine Verlagerung quer zur Hubrichtung mindestens ein in eine Passöffnung (42) eingreifendes Passelement (40) vorgesehen ist.

## Claims

1. Device for raising the bonnet (20) of a motor vehicle in the event of a collision with a pedestrian, having a securing element (10) for securing the bonnet (20) to the vehicle bodywork (14) and a pyrotechnic explosive unit (16) for releasing the securing element (10), wherein raising means (18) for raising the bonnet (20) into a collision position can be activated by means of the energy of the explosive unit (16) which is given out when the securing element (10) is released, and wherein the raising means (18) comprise an expansion unit (44; 58) which can be expanded in the raising direction by means of the propulsion gas of the explosive unit (16), and is preferably embodied as a fabric bag, folding bellows or telescopic tube, **characterized in that** the explosive unit (16) is inserted into a cavity in the securing element (10).

2. Device according to Claim 1, **characterized in that** the securing element (10) forms a connecting element for rigidly connecting the bonnet (20) to the vehicle bodywork (14) in a rigid fashion at least in the raising direction.

3. Device according to Claim 1 or 2, **characterized in that** the securing element (10) has two securing element parts (28, 30) which can be separated by the explosive unit (16) at a predetermined break point, and **in that** the securing element parts (28, 30) can be moved apart from one another as raising means (18) by the explosive unit (16).

4. Device according to one of Claims 1 to 3, **characterized in that** the raising means (18) have a transmission element for transmitting the pulse which is imparted by the propulsion gas stream of the explosive unit (16).

5. Device according to one of Claims 1 to 4, **characterized in that** the raising means (18) comprise a cylinder unit (32) which surrounds the securing element (10) and the explosive unit (16) which is located therein, and is, in particular, formed by a sleeve.

6. Device according to one of Claims 1 to 5, **characterized in that** the bonnet (20) is coupled to the vehicle bodywork (14) by means of a multi-joint bonnet hinge (20), wherein a first joint (68) is provided for the normal operating mode and a second joint (70) for the event of a collision, and the hinge elements (74, 76) which are connected via the second joint (70) are secured to one another by means of the securing element (10) and can be spread apart from one another by means of the explosive unit (16).

7. Device according to one of Claims 1 to 6, **characterized in that** the explosive unit (16) is arranged in a preferably dove-tail-shaped hinge element of a bonnet hinge (20) which connects the bonnet (20) to the vehicle bodywork (14), and **in that** the hinge element which forms the securing element (10) can be separated by means of the explosive unit (16).

8. Device according to one of Claims 1 to 7, **characterized in that** the raising means (18) comprise a raising piston (62) which is guided in a raising cylinder (60), wherein the raising piston (62) is secured in a locking position by the securing element (10), and the securing element (10) can be released by the propulsion gas of the explosive unit (16) which acts on the raising cylinder (60).

9. Device according to Claim 8, **characterized in that** in the locking position the securing element (10), which is preferably embodied as an aligning pin, produces a positively locking connection between the raising piston (62) and the raising cylinder (60) and can be moved by means of the propulsion gas into a release position which cancels out the positively locking engagement.

10. Device according to one of Claims 1 to 9, **characterized in that** the explosive unit (16) acts as a pyrotechnic driving means for the production of propulsion gas.

11. Device according to one of Claims 1 to 10, **characterized by** a travel limiter (34) which is connected on the bonnet side and the vehicle body side and has the purpose of limiting and/or controlling the raising movement of the bonnet (20).

12. Device according to Claim 11, **characterized in that** the travel limiter (34) is formed by a flexible woven part or sheet-metal part which can be torn or bent up or a deformable plastic part.

13. Device according to one of Claims 1 to 12, **characterized in that**, in order to secure the bonnet (20) against displacement in the transverse direction with respect to the raising direction, at least one aligning element (40) which engages in an aligning opening (42) is provided.

## Revendications

1. Dispositif pour soulever le capot avant (20) d'un véhicule automobile en cas de collision avec un piéton, comprenant un organe de retenue (10) pour fixer le capot avant (20) à la carrosserie du véhicule (14) et une unité explosive pyrotechnique (16) pour libérer l'organe de retenue (10), des moyens de levage (18) pour soulever le capot avant (20) dans une position de collision pouvant être actionnés au moyen de l'énergie libérée par l'unité explosive (16) lors de la libération de l'organe de retenue (10), et les moyens de levage (18) comprenant une unité d'expansion (44 ; 58) pouvant se déployer dans la direction de levage au moyen du gaz propulseur de l'unité explosive (16), de préférence réalisée sous forme de sac de toile, de soufflet, ou de tube télescopique, **caractérisé en ce que** l'unité explosive (16) est insérée dans une cavité de l'organe de retenue (10).

2. Dispositif selon la revendication 1, **caractérisé en ce que** l'organe de retenue (10) forme un élément de connexion pour la connexion rigide du capot avant (20) à la carrosserie du véhicule (14) au moins dans la direction de levage.

3. Dispositif selon la revendication 1 ou 2, **caractérisé en ce que** l'organe de retenue (10) présente deux parties d'organe de retenue (28, 30) pouvant être séparées par l'unité explosive (16) au niveau d'une zone destinée à la rupture, et **en ce que** les parties d'organe de retenue (28, 30) peuvent être écartées l'une de l'autre en tant que moyen de levage (18) par l'unité explosive (16).

4. Dispositif selon l'une quelconque des revendications 1 à 3, **caractérisé en ce que** les moyens de levage (18) présentent un élément de transfert pour transférer l'impulsion fournie par le flux de gaz propulseur de l'unité explosive (16).

5. Dispositif selon l'une quelconque des revendications 1 à 4, **caractérisé en ce que** les moyens de levage (18) comprennent une unité cylindrique (32) entourant l'organe de retenue (10) et l'unité explosive (16) se trouvant à l'intérieur de celui-ci, notamment formée par un manchon.

6. Dispositif selon l'une quelconque des revendications 1 à 5, **caractérisé en ce que** le capot avant (20) est articulé par le biais d'une charnière de capot à plusieurs articulations (20) à la carrosserie du véhicule (14), une première articulation (68) étant prévue pour le fonctionnement normal et une deuxième articulation (70) étant prévue en cas de collision et les organes de charnière (74, 76) connectés par le biais de la deuxième articulation (70) étant fixés l'un à l'autre par l'organe de retenue (10) et pouvant être écartés l'un de l'autre par l'unité explosive (16).

7. Dispositif selon l'une quelconque des revendications 1 à 6, **caractérisé en ce que** l'unité explosive (16) est disposée dans un organe de charnière, de préférence en forme de col de cygne, d'une charnière de capot (20) reliant le capot avant (20) à la carrosserie du véhicule (14), et **en ce que** l'organe de charnière formant l'organe de retenue (10) peut être ouvert par l'unité explosive (16).

8. Dispositif selon l'une quelconque des revendications 1 à 7, **caractérisé en ce que** les moyens de levage (18) comprennent un piston de levage (62) guidé dans un cylindre de levage (60), le piston de levage (62) étant fixé dans une position de verrouillage par l'organe de retenue (10), et l'organe de retenue (10) pouvant être déverrouillé par le gaz propulseur de l'unité explosive (16) sollicitant le cylindre de levage (60).

9. Dispositif selon la revendication 8, **caractérisé en ce que** l'organe de retenue (10) réalisé de préférence sous forme de goupille d'ajustement produit dans la position de verrouillage un engagement par correspondance géométrique entre le piston de levage (62) et le cylindre de levage (60), et peut être déplacé au moyen du gaz propulseur dans une position de déverrouillage supprimant l'engagement par correspondance géométrique.

10. Dispositif selon l'une quelconque des revendications 1 à 9, **caractérisé en ce que** l'unité explosive (16) agit en produisant du gaz propulseur en tant que moyen d'entraînement pyrotechnique.

11. Dispositif selon l'une quelconque des revendications 1 à 10, **caractérisé par** un limiteur de course (34) connecté du côté du capot et de la carrosserie, pour limiter et/ou commander le mouvement de levage du capot avant (20).

12. Dispositif selon la revendication 11, **caractérisé en ce que** le limiteur de course (34) est formé par une partie en toile souple élastique ou par une partie en tôle déchirable ou pliable, ou par une partie en plastique déformable.

13. Dispositif selon l'une quelconque des revendications 1 à 12, **caractérisé en ce que** pour fixer le capot avant (20) pour l'empêcher de se décaler transversalement à la direction de levage, on prévoit au moins un élément d'ajustement (40) venant en prise dans une ouverture d'ajustement (42).
